## Europäisches Patentamt
## European Patent Office
## Office européen des brevets

(19)

(11) Veröffentlichungsnummer: **0 114 613**
**B1**

(12) # EUROPÄISCHE PATENTSCHRIFT

(45) Veröffentlichungstag der Patentschrift:
**27.08.86**

(51) Int. Cl.⁴: **F 16 L 11/16**

(21) Anmeldenummer: **84100233.0**

(22) Anmeldetag: **11.01.84**

(54) **Gewendelter Schlauch.**

(30) Priorität: **24.01.83 US 460291**

(43) Veröffentlichungstag der Anmeldung:
**01.08.84 Patentblatt 84/31**

(45) Bekanntmachung des Hinweises auf die Patenterteilung:
**27.08.86 Patentblatt 86/35**

(84) Benannte Vertragsstaaten:
**AT CH DE FR GB IT LI NL**

(56) Entgegenhaltungen:
**EP - A - 0 071 273**
**FR - A - 1 063 742**
**GB - A - 1 317 193**
**GB - A - 1 473 915**
**US - A - 3 258 212**
**US - A - 3 266 285**
**US - A - 3 309 003**
**US - A - 4 244 202**

**SOVIET INVENTIONS ILLUSTRATED, Sections P,Q;
wekk D 07, 25. März 1981, DERWENT PUBLICATIONS
L+D, LONDON, P 51**

(73) Patentinhaber: **Bürcher, Friedrich, Freischützstrasse 17,
D-8000 München 81 (DE)**

(72) Erfinder: **Bürcher, Friedrich, Freischützstrasse 17,
D-8000 München 81 (DE)**

(74) Vertreter: **Riederer Freiherr von Paar zu Schönau, Anton,
Freyung 615 Postfach 2664, D-8300 Landshut (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen gewendelten Schlauch nach dem Oberbegriff des Anspruchs 1.

Ein derartiger Schlauch ist bereits früher vorgeschlagen worden (EP-A 71 273). Er ist seinem Gesamtkonzept nach insbesondere als Metallfolienschlauch, insbesondere Aluminiumschlauch verwendbar, also als schwer entflammbarer oder unbrennbarer Schlauch für Lüftungs- und Entlüftungsinstallationen in und an Gebäuden. Soll der Schlauch aus einer Metallfolie, die auch eine kaschierte Metallfolie sein kann, bestehen, so ergeben sich für die Herstellung spezielle Schwierigkeiten, die auf der mangelhaften Dehnungsfähigkeit des Materials und auf dessen Schlüpfrigkeit beruhen. Während bei der Herstellung die Wickelmasse sehr genau eingehalten werden müssen, um nicht zu Zerreissspannungen in der Folie zu führen, müssen andererseits sowohl während als auch nach der Herstellung die Verbindungswülste eine solche Struktur aufweisen, dass die von beiden Seiten darin verarbeiteten Folienwindungs-Randbereiche fest im Wulst sitzen und nicht herausgezogen werden können. Nach dem früheren Vorschlag waren die Verbindungswülste so hergestellt, dass ein gefaltetes Verbindungsband aus steifem, aber umfaltbarem Material eine im Querschnitt S-förmige Konfiguration erhält, in deren Taschen die beiden zu verbindenden Randbereiche der Folienstreifen eingesteckt werden, woraufhin die Verbindungswülste plattgewalzt werden. Der Folienstreifen besteht hierbei beispielsweise aus 40 mm breitem und 0,1 oder 0,2 mm starkem Reinaluminiumfolienband aus eloxiertem Aluminium, während das Verbindungsband aus Hartaluminium mit einer Stärke von 0,2 bis 0,5 mm besteht. Ein aus diesen Materialien ohne Verwendung weiterer Mittel wie Kleber oder dergleichen hergestellter Schlauch ist völlig unbrennbar und zugleich in gewissem Umfang flexibel. Probleme können sich indessen hinsichtlich des Zusammenhalts benachbarter Windungen bei stärkerem Zug ergeben. Es hat sich erwiesen, dass die Faltstruktur am Verbindungswulst eine etwas geringere Zugfestigkeit aufweist als die Folie, die bei zu hohem Zug in Längsrichtung des Schlauchs aus dem Verbindungswulst herausgezogen wird.

Die Windungsverbindung mit Hilfe der Faltstruktur kann auch bei anderen als bei Metallschläuchen erwünscht sein, beispielsweise können auch PVC-Schläuche, statt wie üblich entlang den Verbindungswülsten geschweisst zu werden, ohne Aufwand von Wärme durch eine Faltstruktur in ihren Wendeln stabilisiert werden, wobei, wenn die Faltstruktur als Verbindungsband und/oder Saumband Metallbänder verwendet, hierdurch eine gewisse Versteifung des Schlauchs erzielt wird.

Der Erfindung liegt die Aufgabe zugrunde, bei einem Schlauch mit gefalteter Windungsverbindungsstruktur ein Lösen des Schlauchs durch Zugerscheinungen zu verhindern, indem die Zugfestigkeit noch weiter verbessert wird.

Eine erhöhte Zugfestigkeit wird durch den gewendelten Schlauch nach Anspruch 1 erzielt, bei dem im allgemeinen die Ausführung nach Anspruch 2 genügt, die den zusätzlichen Vorteil bildet, dass mit dem Schlauchinneren ausschliesslich die Folie in Berührung kommt, nicht jedoch das Verbindungsband und das Saumband, was von Bedeutung sein kann, wenn der Schlauch besondere Fluide wie aggressive Gase leiten soll. Die Massnahme nach Anspruch 3 erhöht die Zugfestigkeit noch weiter.

Während das Saumband im wesentlichen der Verbindung und der Wulstbildung dient, sorgt das Verbindungsband unmittelbar für den festen Zusammenhalt der benachbarten Windungen, und zwar einerseits durch das spiralige Ineinandergreifen und andererseits durch das Niederdrücken auf die gebildete Faltstruktur. Der mit dem Saumband versehene Folienrand drückt im Fall eines Zugs zunächst auf die gebildete Spirale, mit einer gewissen Kraftkomponente jedoch auch radial nach aussen auf das Verbindungsband, das er aufzuweiten sucht. Die geforderten Materialeigenschaften des Verbindungsbands ergeben sich somit als unter entsprechendem Kraftaufwand faltbar, aber anschliessend ausreichend steif in der gefalteten Form verharrend, um sich weder durch einen Längszug, der unterhalb der Reissfestigkeit der Folie liegt, noch durch die durch diesen Längszug erzeugten Kraftkomponenten abrollen oder aufbiegen zu lassen.

Der Schlauch eignet sich insbesondere zur stetigen Herstellung in Schlauchstücken beispielsweise bis zu einer Länge von 10 m. Längere Schlauchstücke werden einstückig wegen der Verlegbarkeit kaum verlangt, können jedoch bei entsprechender Durchführung des Herstellungsverfahrens ebenfalls hergestellt werden, insbesondere wenn am Kopf des ablaufenden rotierenden Schlauchs noch ein Seilzug angreift, der mit einem Drehfreilauf versehen ist.

Weitere Einzelheiten, Vorteile und Weiterbildungen der Erfindung ergeben sich aus den Unteransprüchen und aus der folgenden Beschreibung bevorzugter Ausführungsbeispiele unter Bezugnahme auf die Zeichnung. Es zeigen:

Fig. 1 eine schematische perspektivische Draufsicht auf einen aus einem einzigen Streifen, einem Verbindungsband und einem Saumband hergestellten gewendelten Schlauch während der Herstellung;

Fig. 2 schematische Längsschnitte durch die Materialien der Schlauchwand zur Veranschaulichung aufeinanderfolgender Verfahrensschritte der Herstellung der Verbindung zwischen benachbarten Wendelwindungen;

Fig. 3 bis 7 schematische Querschnitte durch fertiggestellte Verbindungen verschiedener Konfiguration.

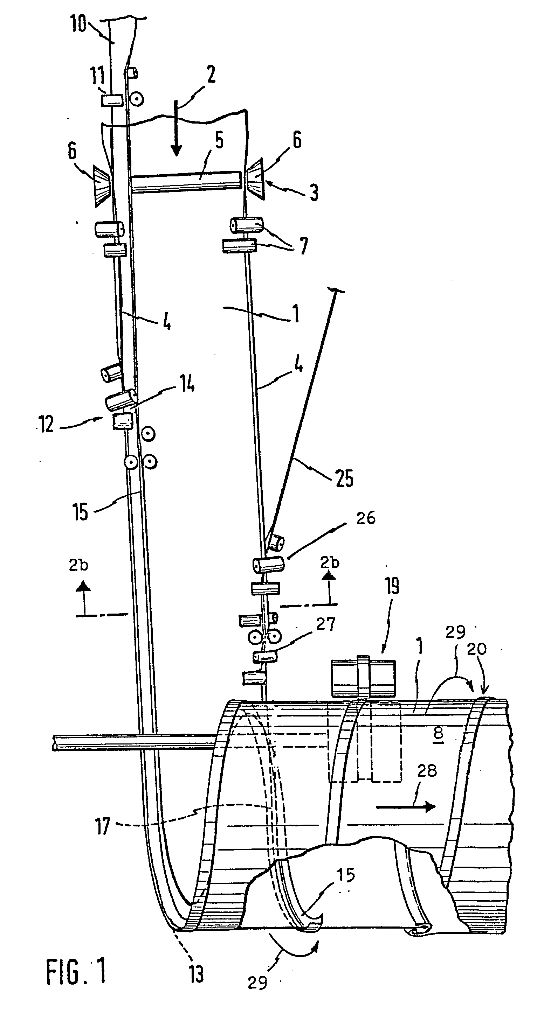

Fig. 1 zeigt die Herstellung eines gewendelten Schlauchs aus einem einzigen zu wendelnden Streifen aus einer halbsteifen Metallfolie, beispielsweise aus 40 mm breitem und 0,1 oder 0,2 mm starkem Reinaluminiumfolienband aus eloxiertem Aluminium, und einem Verbindungsband aus Hartaluminium einer Breite von 17 mm und einer Stärke von 0,2 bis 0,5 mm sowie einem Saumband einer Breite von 8 mm aus gleichem Material wie das Verbindungsband. Ein aus diesen Materialien ohne Verwendung weiterer Mittel wie Klebeband oder dergleichen hergestellter Schlauch ist völlig unbrennbar und ist zugleich in gewissem Umfang flexibel, da sich im Falle einer Biegung die Folie in der Biegungskehle zusammenfalten kann. Die Faltzahl ist freilich nicht sehr hoch, derartige Schläuche beispielsweise mit einem Durchmesser von 10 cm werden jedoch im allgemeinen einmal installiert, wobei die erforderlichen Biegungen hergestellt werden, und bleiben dann für den Rest ihres Gebrauchs in dieser Stellung.

Reinaluminiumfolie von 0,1 oder 0,2 mm Stärke erfüllt diese Anforderungen an die Flexibilität bei gleichzeitiger Biegesteifigkeit, die für den Zusammenhalt der benachbarten Windungen erforderlich ist. Für die Herstellung unbrennbarer Schläuche können jedoch auch andere Metallfolien vergleichbarer Steifigkeit und Biegbarkeit verwendet werden.

Ein entsprechender Metallfolienstreifen 1 wird gemäss einer Bewegungsrichtung 2 einer (in Fig. 1 nicht im einzelnen dargestellten) Wendelführung zugeführt, die den Streifen 1 auf eine Kreisbahn mit Längskomponente, also eine Schraubenlinienbahn umlenkt. Vor Erreichen der Führung werden in einer Randwulststation 3 Umfaltsäume 4 des Streifens 1 gebildet, indem der Rand beiderseits umgeschlagen wird. Zur Erzielung dieses Effekts besteht die dargestellte Randwulststation aus einer Anzahl von Drückrollen, die teils angetriebene Rollen und teils Laufrollen sind. Im einzelnen läuft der Streifen 1 zwischen zwei Führungsrollen 5, von denen nur die obere sichtbar ist, durch, während an seinen Rändern zwei diese Ränder mit ihrer konischen Stirnfläche aufstellende Drückrollen 6 angreifen. Anschliessende Drückrollen 7 drücken auf der einen Seite den aufgestellten Saum umgefaltet wieder auf den Streifen 1 nieder, während er in der Richtung 2 vorläuft zu einem schon hergestellten Schlauchstück 8, in das sich der Streifen 1 laufend verwandelt.

Auf der anderen Seite des Streifens 1 wird vor Erreichen der Randwulststation 3 auf ihn ein Verbindungsband 10 aufgelegt, auf das der umgefaltete Saum 4 niedergedrückt wird. Beim beschriebenen Beispiel handelt es sich um denjenigen Rand, der beim späteren Anschluss des Streifens 1 an das schon vorliegende Schlauchstück 8 dessen zunächst freies Ende bilden wird.

Das Verbindungsband kommt von einer Faltstation 11 her und läuft nach dem Einschieben unter den Saum 4 des Streifens 1 zusammen mit diesem weiter zu einer Umfaltstation 12. Diese Stationen führen zu einer Dreiteilung der Breite des Verbindungsbands 10, dessen als Schenkel bezeichnete Breitenbereiche ein Untersaumschenkel 13, ein Auflageschenkel 14 und ein aufgestellter Schenkel 15 sind. Die Faltstation 11 biegt zunächst den aufgestellten Schenkel 15 in die Vertikale, während die Schenkel 13 und 14 noch in einer gemeinsamen Ebene verbleiben und auf den Streifen 1 aufgelegt werden. Der Untersaumschenkel 13 kommt dabei unter den Umfaltsaum 4 des Streifens 1 zu liegen. In der Umfaltstation 12 wird nun der Saum 4 einschliesslich der darunterliegenden Materiallagen, also des Untersaumschenkels 13 und eines untenliegenden Bereichs des Streifens 1, um 180° umgefaltet und auf den Auflageschenkel 14 zurückgebogen. Zur Veranschaulichung der Grössenverhältnisse der Schenkel des Verbindungsbands 10 sei als Beispiel angegeben, dass dieses Band eine Breite von 17 mm aufweist, von denen der Schenkel 13 eine Breite von 3 und die Schenkel 14

und 15 jeweils eine Breite von 7 mm bekommen. Der aufgestellte Schenkel 15 steht aus der Ebene des Streifens 1 auch noch nach dessen Aufrollen ab, bis er in einer Station 19 über den gegenüberliegenden Rand der benachbarten Windung geschlagen wird.

Auf diesen gegenüberliegenden Rand wird zunächst ein Saumband 25 in einer Aufziehstation 26 aufgezogen. Beim dargestellten Beispiel wird das Saumband 25 über den durch den Saum 4 gebildeten Randwulst aufgezogen, dieser Randwulst könnte indessen auch weggelassen werden. Eine anschliessende Umfaltstation 27 faltet den mit dem Saumband 25 gesäumten Rand des Streifens 1 um 180° auf diesen Streifen zurück. Beim anschliessenden Einlaufen in den Bereich des gewickelten Schlauchs legt sich die in der Umfaltstation 27 gebildete Kante dieser Streifenseite in den Winkel zwischen die Schenkel 14 und 15 des Verbindungsbands der gegenüberliegenden Streifenseite, wobei diese gegenüberliegende Seite bereits einen Vorsprung von einer Umfangslänge hat. Durch das erwähnte Niederwalzen des aufgestellten Schenkels 15 auf den umgefalteten Saum mit dem Saumband 25 in der Station 19 wird die Verbindungsstruktur gefestigt. Der Schlauch bewegt sich weiter in einer Richtung 28 unter Rotation in einer Drehrichtung 29.

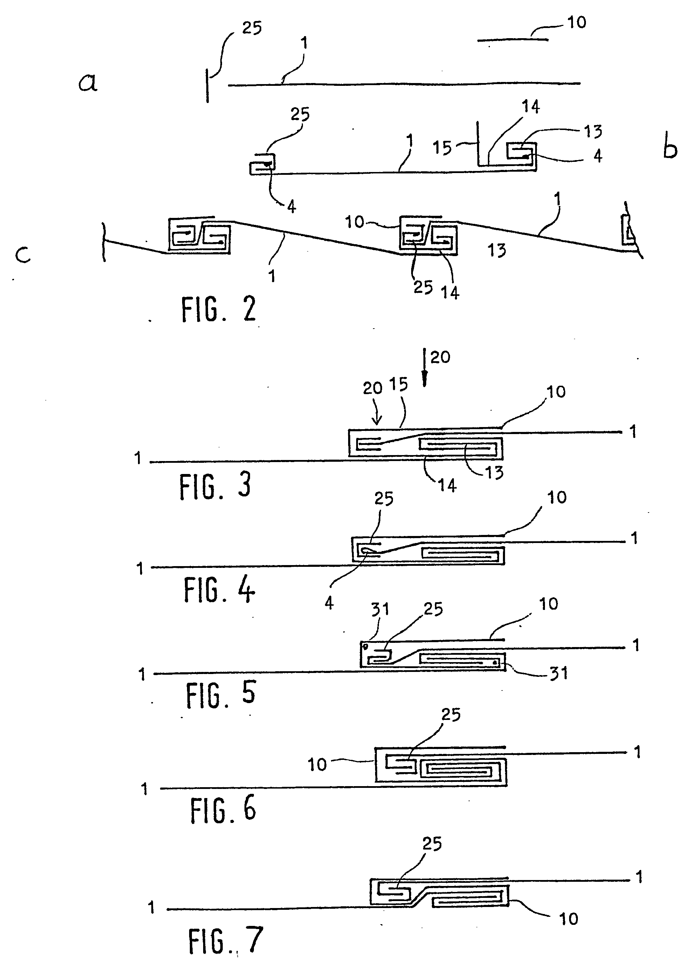

Fig. 2 veranschaulicht schematisch die Entstehungsschritte des Schlauchs nach Fig. 1. Zunächst werden der Streifen 1 und die Bänder 10 und 25 herangeführt, wie unter 2a dargestellt ist. 2b zeigt bereits den Zustand in einer Schnittebene 2b-2b in Fig. 1. Fig. 2c schliesslich veranschaulicht einen Schnitt entlang einer Mantellinie des hergestellten Schlauchs.

Die Fig. 3 bis 7 zeigen verschiedene Variationsmöglichkeiten der Bildung des Verbindungswulsts. Die einzelnen Massnahmen können auch in anderer Kombination verwirklicht sein. Die Zeichnung zeigt zur Unterscheidung der Lagen des Verbindungswulsts 20 diese Lagen unter gegenseitigem Abstand, im tatsächlichen Schlauch sind diese Lagen jedoch fest aufeinandergepresst.

Gemäss Fig. 3 ist der Rand des Streifens 1 mit dem Saumband 25 nicht umgebogen, desgleichen ist der Rand des Streifens 1 selbst nicht umgesäumt, so dass diesbezüglich keine Breite verlorengeht und die Herstellungsschritte vereinfacht werden. Dafür ist der in der Zeichnung rechte Streifen 1 leichter aus dem Verbindungswulst 20 herausziehbar. Der in der Zeichnung rechte Rand des linken Streifens 1 ist mit dem Verbindungsband 10 in einfacher Spiralwindung nach oben umgebogen, wobei das Verbindungsband 10 in diesem Bereich nur den einfachen Knick zwischen den Schenkeln 13 und 14 aufweist, während der Randbereich des Streifens 1 doppelt geknickt ist. Durch die entsprechende Umbiegung nach oben kommt das in der Zeichnung untenliegende Schlauchinnere nur mit dem Material des Streifens 1 und nicht mit dem Verbindungsband 10 und/oder dem Saumband 25 in Berührung.

Der Verbindungswulst 20 nach Fig. 4 ist im Vergleich zu dem nach Fig. 3 dadurch abgewandelt, dass der in der Zeichnung rechte Streifen 1 entlang seinem linken Rand unter Bildung des Umfaltsaums 4 umgebogen und dadurch entlang diesem Rand unter Bildung eines Saumwulsts verdickt ist. Über diesen Saumwulst ist das Saumband 25 gezogen, das gemeinsam mit dem Umfaltsaum 4 zu einer zusätzlichen Verdickung dieses Rands des Streifens 1 führt und mit seiner an sich offenen, jedoch im fertigen Verbindungswulst zusammengedrückten Seite den spiralig eingerollten Randwulst des in der Zeichnung linken Streifens 1 festhält.

Nach Fig. 5 ist im Vergleich zum Verbindungswulst nach Fig. 3 zwar nur der einfache Rand des Streifens 1 ohne den Umfaltsaum 4 vom Saumband 25 umsäumt, es ist also auf dieser Seite die Station mit den Drückrollen 6 und 7 (Fig. 1) weggelassen, jedoch ist der gesäumte Rand insgesamt in der Umfaltstation 27 nach oben umgelegt worden, wodurch ein Längszug in der Schlauchwand dazu führt, dass der durch das Umsäumen und Umschlagen gebildete Randwulst des rechten Streifens 1 gegen die an der Verbindungslinie zwischen dem linken Streifen 1 und dem Verbindungsband 10 gebildete Spirale drückt, die den Zug aufnimmt. Ein Herausziehen des linken Rands des rechten Streifens 1 aus dem Saumband 25 wird durch den beim Austritt aus dem Saumband 25 gebildeten Knick des Streifens 1 verhindert.

Bei der Ausführungsform nach Fig. 5 sind weiterhin noch Drahtlagen 31 mit eingezogen, die den schraubenlinigen Verbindungswulst verstärken, das Aufbiegen aufgrund eines Längszugs verhindern und eventuelle nach aussen gerichtete Radialkräfte aufnehmen.

Gemäss Fig. 6 ist wiederum der einfache Rand des rechten Streifens 1 vom Saumband 25 umsäumt, dieser Saum ist jedoch nicht nach oben, sondern nach unten umgeschlagen, so dass bei Längszug die Kraft noch mehr von der Spirale und weniger in Radialrichtung vom äusseren Schenkel 15 des Verbindungsbands 10 aufgenommen wird. Ausserdem ist beim Verbindungswulst nach Fig. 6 der durch den rechten Rand des linken Streifens 1 und das mit ihm zusammengefaltete Verbindungsband 10 gebildete Spiralwickel nochmals umgefaltet, so dass eine noch weiter aufgerollte Spirale entsteht, die sowohl zur besseren Aufnahme der Längskraft im Sinne eines erschwerten Abwickelns als auch zur besseren Abstützung des umgebogenen Saums mit dem Saumband 25 dienlich ist, da sie in Radialrichtung stärker aufträgt.

Der Verbindungswulst nach Fig. 7 ist schliesslich insofern unterschiedlich, als dort der durch die Verbindung des linken Streifens 1 mit dem Verbindungsband 10 gebildete Spiralwickel nach unten, also nach innen gewickelt ist, wobei dann der Streifen 1 nur eine einfache Umschlagung erfährt, während das Verbindungsband 10, ähnlich wie gemäss Fig. 6, in diesem Randbereich doppelt umgefaltet ist. Hierdurch erfolgt die Längsabstützung der Teile in stärkerem Masse an den Lagen des — aus stärkerem Material bestehenden — Verbindungsbands 10, während die beiderseitigen Streifenränder nur einfach umgeschlagen sind und von ihnen wenig Material verloren geht.

In nicht dargestellter Weise könnte eine Abwandlung auch darin bestehen, dass zwei Folienstreifen 1, die unterschiedlich breit sein können, zugeführt werden und sich in Schlauchlängsrichtung abwechseln, jeweils durch einen Verbindungswulst 20 mit dem anderen der Folienstreifen verbunden. Die Streifen und Wülste haben dabei im Schlauch einen steileren Verlauf ihrer Schraubenlinien.

In Abwandlung der Schlauchherstellung gemäss der schematischen Darstellung nach Fig. 1 kann auch der hinsichtlich der Bewegungsrichtung 2 vorauseilende Rand der mit dem Verbindungsband 10 belegte Rand sein, während der mit dem Saumband 15 umsäumte Rand der nacheilende Rand ist.

## Patentansprüche

1. Gewendelter Schlauch aus wenigstens einem Folienstreifen (1), der in Windungen liegt, die mit den jeweiligen Nachbarwindungen entlang einem am Rand des Streifens (1) entlanglaufenden Überlappungsbereich durch einen schraubenlinig umlaufenden Verbindungswulst (20) verbunden sind, der durch Einfassen eines der Randbereiche des Streifens durch ein im Querschnitt U-förmiges Saumband (25) sowie durch Einschliessen und Zusammenhalten der Randbereiche durch ein um sie herumgefaltetes Verbindungsband (10) aus steifem, aber faltbarem Material gebildlet ist, das im Verlauf seiner Breite um den einen mit dem Saumband (25) versehenen Band des Streifens (1) umgeschlagen und auf die Aussenseite des Streifens (1) in dieser Windung niedergebogen ist, dadurch gekennzeichnet, dass der unter dem Randbereich des Streifens (1) mit dem Saumband (25) befindliche Randbereich des auf die Aussenseite des Streifens (1) aufgelegten Verbindungsbands (10) zusammen mit dem anderen, der benachbarten Windung angehörenden Randbereich des Streifens (1) im Querschnitt spiralig eingerollt ist.

2. Gewendelter Schlauch nach Anspruch 1, dadurch gekennzeichnet, dass die spiralige Einrollung um eine einzige Einroll-Windung zur Schlauch-Aussenseite zu gebildet ist.

3. Gewendelter Schlauch nach Anspruch 1 oder 2, dadurch gekennzeichnet, dass der mit dem Saumband (25) eingefasste Randbereich des Streifens (1) umgelegt ist.

## Claims

1. A strip-wound hose made up of at least one foil strip (1) placed in helical turns which each are connected to the strip turns next thereto along an overlapping zone extending along the edge of the strip (1) by a helical connecting bead (20), said bead being formed by placing an edging tape (25) of U-like cross section on one of the edge zones of the strip and by taking in and keeping together the edge zones by a connection band (10) folded round said edge zones, the connection band (10) consisting of a stiff however foldable material and being in the course of its lateral extension bent around the one edge of the strip (1) that is provided with the edging tape (25) and bent down to the exterior surface of the strip (1) in this turn, characterized in that the edge zone of the connection band (10) put onto the exterior surface of the strip (1), said edge zone being placed under that edge zone of the strip (1) that is provided with the edge tape (25), together with the other, next turn edge zone of same strip (1) is rolled in according to a spiral structure.

2. The strip-wound hose of claim 1, characterized in that the wound-in spiral structure is formed by a single turn rolled-in toward the exterior of the hose.

3. The strip-wound hose of claim 1 or 2, characterized in that the edge zone of the strip (1) that is enclosed by the edging tape (25) is bent round back.

**Revendications**

1. Tuyau boudiné d'au moins une bande (1) en feuille disposée en spires, chacune d'elles étant reliée à la spirale voisine, le long d'une zone de chevauchement située au bord de la bande (1), par un bourrelet (20) d'assemblage à parcours hélicoïdal, lequel est formé par l'enserrage d'une des zones périphériques de la bande par une bande de bordure (25) présentant une section transversale en forme d'U, et par l'insertion et le maintien des zones périphériques dans une bande d'assemblage (10) repliée autour de ces zones périphériques et constituée d'un matériau rigide mais pliable dont une partie de la largeur est repliée sur le bord de la bande (1) munie de la bande de bordure (25) et l'autre partie rabattue dans cette même spire sur la face extérieure de la bande (1), caractérisé en ce que cette région du bord, étant sous la zone périphérique de la bande (1) munie de la bande de bordure (25), de la bande d'assemblage (10) rabattue sur la face extérieure de la bande (1) avec l'autre zone périphérique de la bande (1), cette zone périphérique faisant partie de la spire voisine, forme une structure roulée en spirale.

2. Tuyau boudiné selon la revendication 1, caractérisé en ce que cette structure en spirale est formée d'une seule spire dirigée vers l'extérieur du tuyau.

3. Tuyau boudiné selon la revendication 1 ou 2, caractérisé en ce que la zone périphérique de la bande (1) munie de la bande de bordure (25) est repliée.

FIG. 1

a

25    1                                      10

b
25          1    15    14    13
                              4

c
            10    25    14
      1      1    13

FIG. 2

20

20 15          10
                              1
1
FIG. 3          14  13

25          10
                              1
1
FIG. 4
4

31  25          10
                              1
1
FIG. 5          31

25
10
                              1
1
FIG. 6

25
                              1
1
FIG. 7          10